# FASCICULE DE BREVET EUROPEEN

(11) **EP 1 762 319 B1**
(45) Date de publication et mention de la délivrance du brevet: **30.04.2008**
(21) Numéro de dépôt: 05108259.2
(22) Date de dépôt: 08.09.2005
(51) Int. Cl.: B23B 13/08, B23B 13/02, G05B 19/18

(54) **Procédé d'optimisation du fonctionnement d'une machine-outil comportant un dispositif annexe de guidage de barre et machine-outil respective**
Verfahren zur Optimierung der Funktion einer Werkzeugmachine mit einer zusätzlichen Stangenführungseinrichtung und entsprechende Werkzeugmaschine
Method for optimising the function of a machine tool comprising an additional bar guiding device and respective machine tool

(43) Date de publication de la demande: 14.03.2007
(73) Titulaire: Tomos SA, 2740 Moutier (CH)
(72) Inventeur: Schuettel, Patrick, 2762 Roches (CH)
(74) Mandataire: BOVARD AG

(56) Documents cités:
- EP-A- 1 202 147
- US-A- 5 117 544
- PATENT ABSTRACTS OF JAPAN vol. 018, no. 130 (M-1570), 3 mars 1994 (1994-03-03) -& JP 05 318206 A (MIYANO:KK), 3 décembre 1993 (1993-12-03)
- PATENT ABSTRACTS OF JAPAN vol. 018, no. 203 (M-1590), 11 avril 1994 (1994-04-11) -& JP 06 008007 A (TSUGAMI CORP), 18 janvier 1994 (1994-01-18)

## Description

L'invention se rapporte à un procédé d'optimisation du fonctionnement d'une machine-outil permettant la réalisation de pièces par tournage dans une barre de matériau et comportant un dispositif annexe de guidage de barre, notamment, en rotation.

L'invention intéresse particulièrement, mais non exclusivement, un procédé d'optimisation du fonctionnement d'une machine-outil permettant la réalisation de pièces par décolletage dans une telle barre.

L'invention se rapporte également à la machine-outil qui comprend les moyens fonctionnels pour la mise en oeuvre du procédé.

Par barre, dans la présente demande, on désigne tout élément en de matériau rigide et d'une certaine longueur, quelle que soit cette longueur, comportant une surface périphérique, dite première surface périphérique qui définit la section transversale de cette barre.

En général, les barres de matériau utilisées au cours d'une fabrication d'une même série de pièces, sont cylindriques de révolution et sont calibrées à un diamètre constant.

La surface cylindrique de ces barres est en outre rectifiée ou, au moins, présente un état de surface proche de celui obtenu par rectification.

Une machine-outil de décolletage comprend généralement une structure constituée par un bâti qui s'appuie sur un support, tel le sol, et portés par ce bâti :
- au moins une broche porte-pièce équipée d'une partie active montée tournante autour d'un premier axe et qui permet de maintenir fermement la barre et de l'entraîner en rotation autour de son axe longitudinal, au moins à une première vitesse prédéterminée, de manière à permettre l'usinage de cette barre, notamment, au niveau de sa première extrémité, et ce, au moyen d'au moins un outil d'usinage, la partie active de cette broche porte-pièce étant entraînée en rotation à la première vitesse par un premier moyen fonctionnel d'entraînement,
- au moins un dispositif annexe de guidage comportant au moins un organe de guidage en rotation de la première extrémité de la barre autour d'un second axe, cet organe de guidage en rotation étant,
   . supporté par un élément support qui est relié au bâti de la machine-outil de manière telle que le dit second axe soit sensiblement aligné avec ledit premier axe,
   . entraîné en rotation à une seconde vitesse par un second moyen fonctionnel d'entraînement.

Pour assurer sa fonction de guidage, d'une part, l'organe de guidage comprend un passage qui permet à la barre de le traverser axialement et, d'autre part, le diamètre de ce passage alésé est étroitement ajusté à celui de la barre.

L'organe de guidage en rotation du dispositif annexe de guidage est, par rapport à l'élément support et au moyen d'un élément de guidage, guidé en rotation autour du second axe et immobilisé en translation selon ledit second axe.

Dans les dispositifs de l'état de l'art, le second moyen fonctionnel d'entraînement réalise la fonction d'entraînement en rotation de l'organe de guidage à une seconde vitesse qui est identique à la première vitesse de rotation de la broche.

Par exemple, lorsque l'entraînement en rotation de l'organe de guidage et l'entraînement en rotation de la broche mettent en oeuvre deux organes moteurs distincts, ces organes moteurs sont synchronisés (par exemple, JP-A-5318206).

Malgré cette précaution, on a constaté l'apparition d'au moins un événement parasite sur au moins l'un des trois éléments que sont la machine-outil, la barre et la pièce.

Par exemple, cet événement parasite peut consister en au moins :
- une vibration de fréquence prédéterminée,
- un écart de dimension de la pièce qui s'étend au-delà d'une tolérance de dimension prédéterminée,
- un écart d'état de surface de la pièce qui s'étend au-delà d'une tolérance d'état de surface prédéterminée,
- un écart de forme de la pièce qui s'étend au-delà d'une tolérance de forme prédéterminée.

L'homme de l'art a estimé que l'événement parasite est au moins en partie, attribuable à une interaction de surfaces entre l'organe de guidage et la barre.

Accessoirement, il a également été constaté que lors de l'utilisation de dispositifs de l'état de l'art, lorsque l'action de serrage développée sur la barre par un mécanisme de pincement situé dans la partie active de la broche doit être momentanément supprimée, notamment en vue d'autoriser un déplacement longitudinal en translation de la barre en vue d'un usinage, il se produit entre la barre et l'organe de guidage un alternance d'entraînements et de glissements.

Cette alternance d'entraînements et glissements engendre des vibrations particulièrement préjudiciables, notamment, à la précision d'usinage.

On a remarqué que le déplacement relatif de translation entre la barre et l'organe de guidage ne peut pas être obtenu avec toute la régularité souhaitée.

En effet, on a constaté que le déplacement relatif recherché est, d'une part, retardé du fait de l'existence d'une importante résistance d'amorçage du déplacement de la barre dans l'organe de guidage et, d'autre part, lorsqu'il est amorcé, perturbé du fait de l'existence d'une résistance résiduelle au déplacement qui fluctue dans le temps au cours dudit déplacement.

Un résultat que l'invention vise à obtenir est une machine-outil qui ne présente pas les inconvénients précités.

A cet effet, l'invention a pour objet un procédé d'optimisation du fonctionnement d'une machine-outil du type précité et selon la revendication 1.

L'invention se rapporte également à la machine-outil qui comprend les moyens fonctionnels pour la mise en oeuvre du procédé.

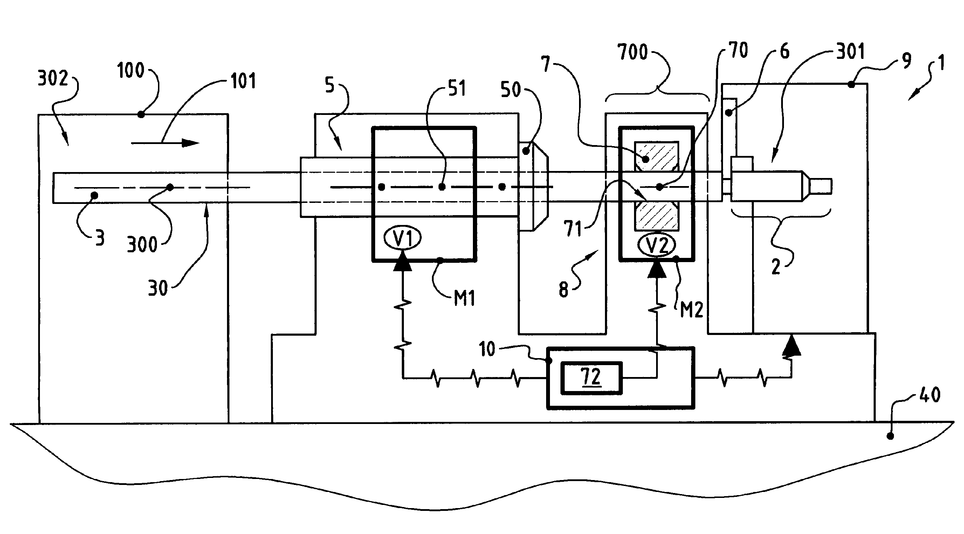

L'invention sera bien comprise à la lecture de la description ci-après faite à titre d'exemple non limitatif en regard du dessin ci-annexé qui représente schématiquement, vue latéralement et partiellement en coupe, une machine-outil équipée du dispositif de guidage annexe selon l'invention.

La représentation est faite de manière schématique et sous forme de blocs fonctionnels sans détails techniques et l'homme de l'art saura sans difficulté choisir des mécanismes et des organes fonctionnellement adaptés.

En se reportant au dessin on voit une machine-outil 1 pour la réalisation par décolletage de pièces 2 dans des barres 3 de matériau.

Par barre 3 de matériau, dans la présente demande, on désigne un élément rigide d'une certaine longueur, quelle que soit cette longueur, comportant une surface périphérique, dite première surface périphérique 30 qui définit la section transversale de cette barre 3.

Ci-après la barre 3 de matériau est plus simplement dite barre 3.

La barre 3 présente un axe longitudinal 300 et deux extrémités opposées, dites première extrémité 301 et deuxième extrémité 302.

Une machine-outil 1 de tournage, notamment de décolletage, comprend généralement une structure constituée par un bâti 4 qui s'appuie sur un support 40, tel le sol, et portés par ce bâti 4 :
- au moins une broche porte-pièce 5 équipée d'une partie active 50 montée tournante autour d'un premier axe 51 et qui permet de maintenir fermement la barre 3 et de l'entraîner en rotation autour de son axe longitudinal 300 de manière à permettre l'usinage de cette barre 3, notamment, au niveau de sa première extrémité 301, et ce, au moyen d'au moins un outil d'usinage 6, la partie active 50 de cette broche-porte-pièce 5 étant entraînée en rotation à la première vitesse V1 par un premier moyen fonctionnel d'entraînement M1,
- au moins un dispositif annexe de guidage 700 comportant au moins un organe 7 de guidage en rotation de la première extrémité 301 de la barre 3 autour d'un second axe 70, cet organe 7 de guidage en rotation étant,
   . supporté par un élément support 8 qui est relié au bâti 4 de la machine-outil 1 de manière telle que le dit second axe 70 soit sensiblement aligné avec ledit premier axe 51,
   . entraîné en rotation à une seconde vitesse V2 par un second moyen fonctionnel d'entraînement M2.

Avantageusement, la machine-outil comprend au moins un système d'usinage 9 comprenant au moins un outil d'usinage 6 qui, notamment, d'une part, est guidé et déplacé dans au moins une première direction déterminée pour autoriser l'usinage de la barre 3 et, d'autre part, est placé sous l'influence d'au moins une unité de commande 10.

L'organe 7 de guidage en rotation du dispositif annexe de guidage 700 est, par rapport à l'élément support 8 et au moyen d'un élément de guidage 71, guidé en rotation autour du second axe 70 et immobilisé en translation selon ledit second axe 70.

A la machine-outil 1 est avantageusement associé un dispositif ravitailleur 100 situé en arrière de la broche porte-pièce 5 par rapport au sens 101 dans lequel la barre 3 est introduite dans la machine-outil 1.

Cette association est bien connue et couramment utilisée.

Le dispositif ravitailleur 100 n'a pas été représenté en détails car cela n'a pas d'incidence sur l'invention.

Lors de l'usinage, la pièce 2 et la première extrémité 301 de la barre 3 ne sont pas distinctes dans un premier temps, et ce n'est qu'après réalisation d'un certain nombre d'usinages que la pièce 2 existe physiquement en étant effectivement prélevée dans la barre 3.

Cela n'apparaît pas clairement sur les dessins, mais est largement connu de l'homme du métier.

Par exemple, la machine-outil 1 est équipée d'au moins un système d'usinage 9 porté par un appareil (non représenté) de guidage et de déplacement en translation dans au moins une première direction située dans un premier plan sécant à l'axe longitudinal 300 de la barre 3.

Le système d'usinage 9 comprend par exemple au moins un outil d'usinage 6 destiné à être guidé et déplacé dans deux directions sécantes dont ladite première direction D1 et une seconde direction D2.

Par exemple, la machine-outil 1 porte au moins un système d'usinage 9, d'une part, équipé d'une pluralité d'outils d'usinage 6 qui sont destinés à être guidés et déplacés dans différents plans déterminés pour autoriser l'usinage complexe de la barre 3 et, d'autre part, placé sous l'influence d'au moins une unité de commande 10, par exemple numérique.

Bien que cela n'apparaisse pas de manière flagrante sur les dessins, pour assurer sa fonction de guidage, d'une part, l'organe de guidage 7 comprend un passage alésé 71 qui permet à la barre 3 de le traverser axialement et, d'autre part, le diamètre de ce passage alésé 71 est étroitement ajusté à celui de la barre 3.

Selon le procédé d'optimisation du fonctionnement annoncé, au cours d'au moins une étape, on agit sur au moins l'un desdits premier moyen fonctionnel d'entraînement M1 et second moyen fonctionnel d'entraînement M2 pour provoquer une différence de vitesse de valeur prédéterminée "DV" entre la première vitesse de rotation V1 et la seconde vitesse de rotation V2.

De préférence, la machine-outil 1 met en oeuvre :
- une unité de commande 10 telle une unité de commande numérique,
- un premier moyen fonctionnel d'entraînement M1 qui consiste en un premier moteur électrique de type à commande numérique,
- un second moyen fonctionnel d'entraînement M2 qui consiste en un second moteur électrique de type à commande numérique.

De manière notable, la machine-outil 1 comprend au moins un moyen fonctionnel de commande 72 qui permet d'agir sur au moins l'un desdits premier moyen fonctionnel d'entraînement M1 et second moyen fonctionnel d'entraînement M2 pour provoquer une différence de vitesse de valeur prédéterminée "DV" entre la première vitesse de rotation V1 et la seconde vitesse de rotation V2.

De préférence, le moyen fonctionnel de commande 72 fait partie de l'unité de commande 10.

De manière remarquable, selon le procédé, on agit sur au moins l'un desdits premier moyen fonctionnel d'entraînement M1 et second moyen fonctionnel d'entraînement M2, pour provoquer une différence de vitesse de valeur prédéterminée "DV" entre la première vitesse de rotation V1 et la seconde vitesse de rotation V2 et, par cela, supprimer au moins partiellement au moins un évènement parasite,
. détectable sur au moins l'un des trois éléments que sont la machine-outil 1, la barre 3 et la pièce 2, et
. dont on estime qu'il est au moins en partie attribuable à une interaction entre l'organe 7 de guidage et la barre 3.

D'une première manière, on agit pour provoquer une différence de vitesse de valeur prédéterminée "DV" telle que la première vitesse de rotation V1 est inférieure à la seconde vitesse de rotation V2.

D'une seconde manière, on agit pour provoquer une différence de vitesse de valeur prédéterminée "DV" telle que la première vitesse de rotation V1 est supérieure à la seconde vitesse de rotation V2.

Tel que cela a été annoncé, ce procédé permet de supprimer au moins partiellement au moins un évènement parasite,
. détectable sur au moins l'un des trois éléments que sont la machine-outil 1, la barre 3 et la pièce 2, et
. dont on estime qu'il est au moins en partie attribuable à une interaction entre l'organe 7 de guidage et la barre 3.

Selon le procédé, en vue de déterminer la différence de vitesse de valeur prédéterminée "DV" entre la première vitesse de rotation V1 et la seconde vitesse de rotation V2 :
- on entraîne la barre 3 en rotation à la première vitesse de rotation V1 de valeur déterminée,
- on entraîne l'organe 7 de guidage à une seconde vitesse de rotation V2 qui est sensiblement identique à la première vitesse de rotation,
- on surveille l'apparition d'au moins un évènement parasite,
   . détectable sur au moins l'un des trois éléments que sont la machine-outil 1, la barre 3 et la pièce 2, et
   . dont on estime qu'il est au moins en partie attribuable à une interaction entre l'organe 7 de guidage et la barre 3, et
- lorsqu'on détecte l'apparition de l'événement parasite prédéterminé, on modifie la seconde vitesse de rotation V2, et ce, jusqu'à ce qu'on puisse constater la disparition dudit événement parasite prédéterminé, et dans ce cas, on mémorise la valeur de ladite seconde vitesse de rotation V2 de manière à disposer d'une seconde vitesse de rotation V2 qui présente une différence de valeur prédéterminée "DV" avec la première vitesse de rotation V1.

De manière remarquable, on fait fonctionner la machine-outil de manière à usiner au moins une pièce 2.

Selon une première approche, on considère comme événement parasite une vibration de fréquence prédéterminée.

Selon une seconde approche, on considère comme événement parasite un écart de dimension de la pièce 2 qui s'étend au-delà d'une tolérance de dimension prédéterminée.

Selon une troisième approche, on considère comme événement parasite un écart d'état de surface de la pièce 2 qui s'étend au-delà d'une tolérance d'état de surface prédéterminée.

Selon une quatrième approche, on considère comme événement parasite un écart de forme de la pièce 2 qui s'étend au-delà d'une tolérance de forme prédéterminée.

Suivant une première forme d'application, lorsqu'on détecte l'apparition de l'événement parasite prédéterminé, on augmente progressivement la seconde vitesse de rotation V2 jusqu'à la disparition dudit événement parasite prédéterminé et on mémorise ladite seconde vitesse de rotation V2 afin de pouvoir disposer d'une seconde vitesse de rotation V2 qui présente une différence de valeur prédéterminée "DV" avec la première vitesse de rotation V1.

Suivant une seconde forme d'application, lorsqu'on détecte l'apparition de l'événement parasite prédéterminé, on diminue progressivement la seconde vitesse de rotation V2 jusqu'à la disparition dudit événement parasite prédéterminé et on mémorise ladite seconde vitesse de rotation V2 afin de pouvoir disposer d'une seconde vitesse de rotation V2 qui présente une différence de valeur prédéterminée "DV" avec la première vitesse de rotation V1.

De manière notable,1 chaque moyen fonctionnel de commande 72 est capable d'agir sur au moins l'un desdits premier moyen fonctionnel d'entraînement M1 et second moyen fonctionnel d'entraînement M2, pour provoquer une différence de vitesse de valeur prédéterminée "DV" entre la première vitesse de rotation V1 et la seconde vitesse de rotation V2 et, par cela, supprimer au moins partiellement au moins un évènement parasite, d'une part, détectable sur au moins l'un des trois éléments que sont la machine-outil 1, la barre 3 et la pièce 2, et d'autre part, dont on estime qu'il est au moins en partie attribuable à une interaction entre l'organe 7 de guidage et la barre 3.

De manière encore notable, en vue de déterminer la différence de vitesse de valeur prédéterminée "DV" entre la première vitesse de rotation V1 et la seconde vitesse de rotation V2, le moyen fonctionnel de commande 72 qu'elle comprend, est capable de :
- surveiller et détecter l'apparition d'au moins un évènement parasite,
   . détectable sur au moins l'un des trois éléments que sont la machine-outil 1, la barre 3 et la pièce 2, et
   . dont on estime qu'il est au moins en partie attribuable à une interaction entre l'organe 7 de guidage et la barre 3
- modifier la valeur d'au moins l'une des vitesses que sont la première vitesse de rotation V1 et la seconde vitesse de rotation V2, de manière à induire une différence entre lesdites première vitesse V1 et seconde vitesse V2, et ce, jusqu'à ce que ce moyen de commande 72 puisse détecter la disparition de l'événement parasite prédéterminé, et dans ce cas,
- mémoriser au moins une information en rapport avec la différence de valeur entre lesdites première vitesse V1 et seconde vitesse V2, de manière à pouvoir disposer d'une différence de vitesse de valeur prédéterminée "DV" entre la première vitesse de rotation V1 et la seconde vitesse de rotation V2.

## Revendications

1. Procédé d'optimisation du fonctionnement d'une machine-outil (1) pour la réalisation par décolletage de pièces (2) dans des barres (3) de matériau dite barres (3), chaque barre (3) présentant un axe longitudinal (300) et deux extrémités opposées, dites première extrémité (301) et deuxième extrémité (302), ladite machine-outil comprenant en outre :
- au moins une broche porte-pièce (5) équipée d'une partie active (50) montée tournante autour d'un premier axe (51) et qui, d'une manière contrôlée, permet de maintenir fermement la barre (3) et de l'entraîner en rotation autour de son axe longitudinal (300) de manière à permettre l'usinage de cette barre (3), notamment, au niveau de sa première extrémité (301), et ce, au moyen d'au moins un outil d'usinage (6), la partie active (50) de cette broche-porte-pièce (5) étant entraînée en rotation à une première vitesse (V1) par un premier moyen fonctionnel d'entraînement (M1),
- au moins un dispositif annexe de guidage (700) comportant au moins un organe (7) de guidage en rotation de la première extrémité (301) de la barre (3) autour d'un second axe (70), cet organe (7) de guidage en rotation étant,
. supporté par un élément support (8) qui est relié au bâti (4) de la machine-outil (1) de manière telle que le dit second axe (70) soit sensiblement aligné avec ledit premier axe (51),
. entraîné en rotation à une seconde vitesse (V2) par un second moyen fonctionnel d'entraînement (M2),
ce procédé étant **caractérisé en ce qu**'il comprend une étape au cours de laquelle on agit sur au moins l'un desdits premier moyen fonctionnel d'entraînement (M1) et second moyen fonctionnel d'entraînement (M2) pour provoquer une différence de vitesse de valeur prédéterminée "DV" entre la première vitesse de rotation (V1) et la seconde vitesse de rotation (V2).

2. Procédé d'optimisation du fonctionnement selon la revendication 1, **caractérisé en ce qu**'on agit sur au moins l'un desdits premier moyen fonctionnel d'entraînement (M1) et second moyen fonctionnel d'entraînement (M2), pour provoquer une différence de vitesse de valeur prédéterminée "DV" entre la première vitesse de rotation (V1) et la seconde vitesse de rotation (V2) et, par cela, supprimer au moins partiellement au moins un évènement parasite,
. détectable sur au moins l'un des trois éléments que sont la machine-outil (1), la barre (3) et la pièce (2), et
. dont on estime qu'il est au moins en partie attribuable à une interaction entre l'organe (7) de guidage et la barre (3).

3. Procédé selon la revendication 1 ou 2, **caractérisé en ce qu'**on agit pour provoquer une différence de vitesse de valeur prédéterminée "DV" telle que la première vitesse de rotation (V1) est inférieure à la seconde vitesse de rotation (V2).

4. Procédé selon la revendication 1 ou 2, **caractérisé en ce qu**'on agit pour provoquer une différence de vitesse de valeur prédéterminée "DV" telle que la première vitesse de rotation (V1) est supérieure à la seconde vitesse de rotation (V2).

5. Procédé selon l'une quelconque des revendications 1 à 4 **caractérisé en ce qu'**en vue de déterminer la différence de vitesse de valeur prédéterminée "DV" entre la première vitesse de rotation (V1) et la seconde vitesse de rotation (V2) :
- on entraîne la barre (3) en rotation à la première vitesse de rotation (V1) de valeur déterminée,
- on entraîne l'organe (7) de guidage à une seconde vitesse de rotation (V2) qui est sensiblement identique à la première vitesse de rotation,
- on surveille l'apparition d'au moins un évènement parasite,
. détectable sur au moins l'un des trois éléments que sont la machine-outil (1), la barre (3) et la pièce (2), et
. dont on estime qu'il est au moins en partie attribuable à une interaction entre l'organe (7) de guidage et la barre (3), et
- lorsqu'on détecte l'apparition de l'événement parasite prédéterminé, on modifie la seconde vitesse de rotation (V2), et ce, jusqu'à ce qu'on puisse constater la disparition dudit événement parasite prédéterminé, et dans ce cas, on mémorise la valeur de ladite seconde vitesse de rotation (V2) de manière à disposer d'une seconde vitesse de rotation (V2) qui présente une différence de valeur prédéterminée "DV" avec la première vitesse de rotation (V1).

6. Procédé selon la revendication 5, **caractérisé en ce qu**'on fait fonctionner la machine-outil de manière à usiner au moins une pièce (2).

7. Procédé selon la revendication 5 ou 6, **caractérisé en ce qu'**on considère comme événement parasite une vibration de fréquence prédéterminée.

8. Procédé selon la revendication 5 ou 6, **caractérisé en ce qu**'on considère comme événement parasite un écart de dimension de la pièce (2) qui s'étend au-delà d'une tolérance de dimension prédéterminée.

9. Procédé selon la revendication 5 ou 6, **caractérisé en ce qu**'on considère comme événement parasite un écart d'état de surface de la pièce (2) qui s'étend au-delà d'une tolérance d'état de surface prédéterminée.

10. Procédé selon la revendication 5 ou 6, **caractérisé en ce qu**'on considère comme événement parasite un écart de forme de la pièce (2) qui s'étend au-delà d'une tolérance de forme prédéterminée.

11. Procédé selon l'une quelconque de revendications 5 à 10, **caractérisé en ce que** lorsqu'on détecte l'apparition de l'événement parasite prédéterminé, on augmente progressivement la seconde vitesse de rotation (V2) jusqu'à la disparition dudit événement parasite prédéterminé et on mémorise ladite seconde vitesse de rotation (V2) afin de pouvoir disposer d'une seconde vitesse de rotation (V2) qui présente une différence de valeur prédéterminée "DV" avec la première vitesse de rotation (V1).

12. Procédé selon l'une quelconque de revendications 5 à 10, **caractérisé en ce que** lorsqu'on détecte l'apparition de l'événement parasite prédéterminé, on diminue progressivement la seconde vitesse de rotation (V2) jusqu'à la disparition dudit événement parasite prédéterminé et on mémorise ladite seconde vitesse de rotation (V2) afin de pouvoir disposer d'une seconde vitesse de rotation (V2) qui présente une différence de valeur prédéterminée "DV" avec la première vitesse de rotation (V1).

13. Machine-outil (1) pour la réalisation par décolletage de pièces (2) dans des barres (3) de matériau dite barres (3), chaque barre (3) présentant un axe longitudinal (300) et deux extrémités opposées, dites première extrémité (301) et deuxième extrémité (302), ladite machine-outil comprenant en outre :
- au moins une broche porte-pièce (5) équipée d'une partie active (50) montée tournante autour d'un premier axe (51) et qui, d'une manière contrôlée, permet de maintenir fermement la barre (3) et de l'entraîner en rotation autour de son axe longitudinal (300) de manière à permettre l'usinage de cette barre (3), notamment, au niveau de sa première extrémité (301), et ce, au moyen d'au moins un outil d'usinage (6), la partie active (50) de cette broche porte-pièce (5) étant entraînée en rotation à une première vitesse (V1) par un premier moyen fonctionnel d'entraînement (M1),
- au moins un système d'usinage (9) comprenant au moins un outil d'usinage (6),
- au moins un dispositif annexe de guidage (700) comportant au moins un organe (7) de guidage en rotation de la première extrémité (301) de la barre (3) autour d'un second axe (70), cet organe (7) de guidage en rotation étant,
. supporté par un élément support (8) qui est relié au bâti (4) de la machine-outil (1) de manière telle que le dit second axe (70) soit sensiblement aligné avec ledit premier axe (51),
. entraîné en rotation à une seconde vitesse (V2) par un second moyen fonctionnel d'entraînement (M2),
cette machine étant **caractérisée en ce qu**'elle comprend au moins un moyen fonctionnel de commande (72) capable d'agir sur au moins l'un desdits premier moyen fonctionnel d'entraînement (M1) et second moyen fonctionnel d'entraînement (M2) pour provoquer une différence de vitesse de valeur prédéterminée "DV" entre la première vitesse de rotation (V1) et la seconde vitesse de rotation (V2).

14. Machine-outil selon la revendication 13, **caractérisé en ce que** chaque moyen fonctionnel de commande (72) est capable d'agir sur au moins l'un desdits premier moyen fonctionnel d'entraînement (M1) et second moyen fonctionnel d'entraînement (M2), pour provoquer une différence de vitesse de valeur prédéterminée "DV" entre la première vitesse de rotation (V1) et la seconde vitesse de rotation (V2) et, par cela, supprimer au moins partiellement au moins un événement parasite, d'une part, détectable sur au moins l'un des trois éléments que sont la machine-outil (1), la barre (3) et la pièce (2), et d'autre part, dont on estime qu'il est au moins en partie attribuable à une interaction entre l'organe (7) de guidage et la barre (3).

15. Machine-outil selon la revendication 13 ou 14, **caractérisé en ce que** la différence de vitesse de valeur prédéterminée "DV" est telle que la première vitesse de rotation (V1) est inférieure à la seconde vitesse de rotation (V2).

16. Machine-outil selon la revendication 13 ou 14, **caractérisé en ce que** la différence de vitesse de valeur prédéterminée "DV" est telle que la première vitesse de rotation (V1) est supérieure à la seconde vitesse de rotation (V2).

17. Machine outil selon l'une quelconque des revendications 13 à 16, **caractérisée en ce que**, en vue de déterminer la différence de vitesse de valeur prédéterminée "DV" entre la première vitesse de rotation (V1) et la seconde vitesse de rotation (V2), le moyen fonctionnel de commande (72) qu'elle comprend, est capable de :
- surveiller et détecter l'apparition d'au moins un événement parasite,
. détectable sur au moins l'un des trois éléments que sont la machine-outil (1), la barre (3) et la pièce (2), et
. dont on estime qu'il est au moins en partie attribuable à une interaction entre l'organe (7) de guidage et la barre (3)
- modifier la valeur d'au moins l'une des vitesses que sont la première vitesse de rotation (V1) et la seconde vitesse de rotation (V2), de manière à induire une différence entre lesdites première vitesse (V1) et seconde vitesse (V2), et ce, jusqu'à ce que ce moyen de commande (72) puisse détecter la disparition de l'événement parasite prédéterminé, et dans ce cas,
- mémoriser au moins une information en rapport avec la différence de valeur entre lesdites première vitesse (V1) et seconde vitesse (V2), de manière à pouvoir disposer d'une différence de vitesse de valeur prédéterminée "DV" entre la première vitesse de rotation (V1) et la seconde vitesse de rotation (V2).

## Claims

1. Method for optimising the functioning of a machine tool (1) for the creation through cutting of pieces (2) in bars (3) of material, referred to as bars (3), each bar (3) having a longitudinal axis (300) and two opposite ends, referred to as first end (301) and second end (302), said machine tool further comprising:
- at least one workpiece spindle (5) equipped with an active part (50) mounted turning about a first axis (51) and which, in a controlled way, permits the bar (3) to be held firmly and to be driven in rotation about its longitudinal axis (300) in such a way as to permit the machining of this bar (3), in particular at the level of its first end (301), and this by means of at least one machining tool (6), la active part (50) of this workpiece spindle (5) being driven in rotation at a first speed (V1) by a first functional drive means (M1),
- at least one supplementary guiding device (700) including at least one element (7) for guiding in rotation of the first end (301) of the bar (3) about a second axis (70), this element (7) for guiding in rotation being
. supported by a support element (8) which is connected to the frame (4) of the machine tool (1) in such a way that said second axis (70) is substantially aligned with said first axis (51),
. driven in rotation at a second speed (V2) by a second functional drive means (M2),
this method being **characterised in that** it comprises a step in the course of which at least one of said first functional drive means (M1) and second functional drive means (M2) is acted upon to cause a difference in speed of predetermined value "DV" between the first speed of rotation (V1) and the second speed of rotation (V2).

2. Method for optimising functioning according to claim 1, **characterised in that** at least one of said first functional drive means (M1) and second functional drive means (M2) is acted upon to cause a difference in speed of predetermined value "DV" between the first speed of rotation (V1) and the second speed of rotation (V2) and, through this, to eliminate at least partially at least one parasitic event,
. detectable on at least one of three elements which are the machine tool (1), the bar (3) and the piece (2), and
. about which it is assessed that it is at least partly attributable to an interaction between the guiding element (7) and the bar (3).

3. Method according to claim 1 or 2, **characterised in that** action is taken to bring about a difference in speed of predetermined value "DV" such that the first speed of rotation (V1) is less than the second speed of rotation (V2).

4. Method according to claim 1 or 2, **characterised in that** action is taken to bring about a difference in speed of predetermined value "DV" such that the first speed of rotation (V1) is greater than the second speed of rotation (V2).

5. Method according to any one of the claims 1 to 4, **characterised in that** with a view to determining the difference in speed of predetermined value "DV" between the first speed of rotation (V1) and the second speed of rotation (V2):
- the bar (3) is driven in rotation at the first speed of rotation (V1) of predetermined value,
- the guiding element (7) is driven at a second speed of rotation (V2) that is substantially identical to the first speed of rotation,
- the occurrence of at least one parasitic event is monitored,
. detectable on at least one of three elements which are the machine tool (1), the bar (3) and the piece (2), and
. about which it is assessed that it is at least partly attributable to an interaction between the guiding element (7) and the bar (3), and
- when the occurrence of the predetermined parasitic event is detected, the second speed of rotation (V2) is modified, and this until the disappearance of said predetermined parasitic event is able to be ascertained, and in this case the value of said second speed of rotation (V2) is stored so as to have a second speed of rotation (V2) which presents a difference of predetermined value "DV" with the first speed of rotation (V1).

6. Method according to claim 5, **characterised in that** the machine tool is operated in such a way as to machine at least one piece (2).

7. Method according to claim 5 or 6, **characterised in that** considered as parasitic event is a vibration of predetermined frequency.

8. Method according to claim 5 or 6, **characterised in that** considered as parasitic event is a divergence in dimension of the piece (2) which exceeds a predetermined dimensional tolerance.

9. Method according to claim 5 or 6, **characterised in that** considered as parasitic event is a divergence in the surface state of the piece (2) which exceeds a predetermined surface state tolerance.

10. Method according to claim 5 or 6, **characterised in that** considered as parasitic event is a divergence in the shape of the piece (2) which exceeds a predetermined shape tolerance.

11. Method according to any one of the claims 5 to 10, **characterised in that** when the occurrence of the predetermined parasitic event is detected, the second speed of rotation (V2) is increased progressively until said predetermined parasitic event disappears, and said second speed of rotation (V2) is stored in order to be able to have a second speed of rotation (V2) that presents a predetermined difference in value "DV" with the first speed of rotation (V1).

12. Method according to any one of the claims 5 to 10, **characterised in that** when the occurrence of a predetermined parasitic event is detected, the second speed of rotation (V2) is decreased progressively until said predetermined parasitic event disappears, and said second speed of rotation (V2) is stored in order to be able to have a second speed of rotation (V2) that presents a predetermined difference in value "DV" with the first speed of rotation (V1).

13. Machine tool (1) for creating by cutting of pieces (2) in bars (3) of material referred to as bars (3), each bar (3) having a longitudinal axis (300) and two opposite ends, referred to as first end (301) and second end (302), said machine tool further comprising:
- at least one workpiece spindle (5) equipped with an active part (50) mounted turning about a first axis (51) and which, in a controlled way, makes it possible to hold the bar (3) firmly and to drive it in rotation about its longitudinal axis (300) in such a way as to permit the machining of this bar (3), in particular at the level of its first end (301), and this by means of at least one machining tool (6), the active part (50) of this workpiece spindle (5) being driven in rotation at a first speed (V1) by a first functional drive means (M1),
- at least one machining system (9) comprising at least one machining tool (6),
- at least one supplementary guiding device (700) including at least one element (7) for guiding in rotation of the first end (301) of the bar (3) about a second axis (70), this element (7) for guiding in rotation being
. supported by a support element (8) which is connected to the frame (4) of the machine tool (1) in such a way that said second axis (70) is substantially aligned with said first axis (51),
. driven in rotation at a second speed (V2) by a second functional drive means (M2),
this machine being **characterised in that** it comprises at least one functional control means (72) capable of acting upon at least one of said first functional drive means (M1) and second functional drive means (M2) to bring about a difference in speed of predetermined value "DV" between the first speed of rotation (V1) and the second speed of rotation (V2).

14. Machine tool according to claim 13, **characterised in that** each functional control means (72) is capable of acting upon at least one of said first functional drive means (M1) and second functional drive means (M2), to bring about a difference in speed of predetermined value "DV" between the first speed of rotation (V1) and the second speed of rotation (V2) and, through this, to eliminate at least partially at least one parasitic event, on the one hand detectable on at least one of the three elements which are the machine tool (1), the bar (3) and the piece (2), and, on the other hand, about which one assesses that it is at least partially attributable to an interaction between the guiding element (7) and the bar (3).

15. Machine tool according to claim 13 or 14, **characterised in that** the difference in speed of predetermined value "DV" is such that the first speed of rotation (V1) is less than the second speed of rotation (V2).

16. Machine tool according to claim 13 or 14, **characterised in that** the difference in speed of predetermined value "DV" is such that the first speed of rotation (V1) is greater than the second speed of rotation (V2).

17. Machine tool according to any one of the claims 13 to 16, **characterised in that**, with a view to determining the difference in speed of predetermined value "DV" between the first speed of rotation (V1) and the second speed of rotation (V2), the functional control means (72) which it comprises is able:
- to monitor and detect the occurrence of at least one parasitic event,
. detectable on at least one of the three elements which are the machine tool (1), the bar (3) and the piece (2), and
. about which one assesses that it is at least partially attributable to an interaction between the guiding element (7) and the bar (3),
- modify the value of at least one of the speeds which are the first speed of rotation (V1) and the second speed of rotation (V2), in a way so as to lead to a difference between said first speed (V1) and second speed (V2), and this until this control means (72) is able to detect the disappearance of the predetermined parasitic event, and, in this case,
- store at least one piece of information relating to the difference in value between said first speed (V1) and second speed (V2), in such as way as to be able to have a difference in speed of predetermined value "DV" between the first speed of rotation (V1) and the second speed of rotation (V2).

## Patentansprüche

1. Verfahren zur Optimierung der Funktion einer Werkzeugmaschine (1) zur Herstellung von Werkstücken (2) durch Abstechen in Materialstangen (3), genannt Stangen (3), wobei jede Stange (3) eine Längsachse (300) und zwei gegenüberliegende Enden, genannt erstes Ende (301) und zweites Ende (302) aufweist, wobei die Werkzeugmaschine außerdem umfasst:
- mindestens eine Werkstückträger-Spindel (5), ausgestattet mit einem aktiven Teil (50), der drehend um eine erste Achse (51) montiert ist, und der es auf kontrollierte Weise ermöglicht, die Stange (3) fest zu halten und sie zum Drehen um ihre Längsachse (300) zu bringen, um die Bearbeitung dieser Stange (3) zu ermöglichen, insbesondere auf Höhe ihres ersten Endes (301), und dies mithilfe mindestens eines Bearbeitungswerkzeuges (6), wobei der aktive Teil (50) dieser Werkstückträger-Spindel (5) durch ein erstes funktionelles Antriebsmittel (M1) mit einer ersten Geschwindigkeit (V1) zum Drehen gebracht wird,
- mindestens eine angefügte Führungsvorrichtung (700), umfassend mindestens ein Drehführungselement (7) des ersten Endes (301) der Stange (3) um eine zweite Achse (70), wobei dieses Drehführungselement (7)
. durch ein Trägerelement (8) gestützt wird, das mit dem Rahmen (4) der Werkzeugmaschine (1) so verbunden ist, dass die zweite Achse (70) ungefähr mit der ersten Achse (51) ausgerichtet ist,
. mit einer zweiten Geschwindigkeit (V2) durch ein zweites funktionelles Antriebsmittel (M2) zum Drehen gebracht wird,
wobei dieses Verfahren **dadurch gekennzeichnet ist, dass** es eine Phase umfasst, im Laufe derer auf mindestens das erste funktionelle Antriebsmittel (M1) oder das zweite funktionelle Antriebsmittel (M2) eingewirkt wird, um einen Geschwindigkeitsunterschied mit einem im Voraus festgesetzten Wert "DV" zwischen der ersten Drehgeschwindigkeit (V1) und der zweiten Drehgeschwindigkeit (V2) hervorzurufen.

2. Verfahren zur Optimierung der Funktion nach Anspruch 1, **dadurch gekennzeichnet, dass** auf mindestens das erste funktionelle Antriebsmittel (M1) oder das zweite funktionelle Antriebsmittel (M2) eingewirkt wird, um einen Geschwindigkeitsunterschied mit einem im Voraus festgesetzten Wert "DV" zwischen der ersten Drehgeschwindigkeit (V1) und der zweiten Drehgeschwindigkeit (V2) hervorzurufen, und **dadurch**, mindestens teilweise mindestens ein Störereignis zu beseitigen,
welcher auf mindestens einem der drei Elemente, d.h. der Werkzeugmaschine (1), der Stange (3) und dem Werkstück (2), feststellbar ist und
. wovon angenommen wird, dass es zumindest teilweise einer Wechselwirkung zwischen dem Führungselement (7) und der Stange (3) zuzuschreiben ist.

3. Verfahren nach Anspruch 1 oder 2, **dadurch gekennzeichnet, dass** eingegriffen wird, um einen Geschwindigkeitsunterschied mit einem im Voraus festgesetzten Wert "DV" hervorzurufen, so dass die erste Drehgeschwindigkeit (V1) niedriger als die zweite Drehgeschwindigkeit (V2) wird.

4. Verfahren nach Anspruch 1 oder 2, **dadurch gekennzeichnet, dass** eingegriffen wird, um einen Geschwindigkeitsunterschied mit einem im Voraus festgesetzten Wert "DV" hervorzurufen, so dass die erste Drehgeschwindigkeit (V1) höher als die zweite Drehgeschwindigkeit (V2) wird.

5. Verfahren nach einem der Ansprüche 1 bis 4, **dadurch gekennzeichnet, dass** hinsichtlich der Bestimmung des Geschwindigkeitsunterschiedes mit einem im Voraus festgesetzten Wert "DV" zwischen der ersten Drehgeschwindigkeit (V1) und der zweiten Drehgeschwindigkeit (V2):
- die Stange (3) mit der ersten Drehgeschwindigkeit (V1) mit festgesetztem Wert in Drehung versetzt wird,
- das Führungselement (7) mit einer zweiten Geschwindigkeit (V2), die ungefähr identisch mit der ersten Drehgeschwindigkeit ist, in Drehung versetzt wird,
- das Auftreten mindestens eines Störereignisses überwacht wird,
. welches Störereignis auf mindestens einem der drei Elemente, d.h. der Werkzeugmaschine (1), der Stange (3) und dem Werkstück (2) feststellbar ist, und
. wovon angenommen wird, dass es zumindest teilweise einer Wechselwirkung zwischen dem Führungselement (7) und der Stange (3) zuzuschreiben ist, und
- wenn das Auftreten der im Voraus festgesetzten Störereignisses festgestellt wird, die zweite Drehgeschwindigkeit (V2) geändert wird, und dies, bis das Verschwinden des im Voraus festgesetzten Störereignisses festgestellt werden kann, und in diesem Fall wird der Wert der zweiten Drehgeschwindigkeit (V2) gespeichert, um über eine zweite Drehgeschwindigkeit (V2) zu verfügen, die einen im Voraus festgesetzten Wertunterschied "DV" zur ersten Drehgeschwindigkeit (V1) aufweist.

6. Verfahren nach Anspruch 5, **dadurch gekennzeichnet, dass** die Werkzeugmaschine in Betrieb gesetzt wird, um mindestens ein Werkstück (2) zu bearbeiten.

7. Verfahren nach Anspruch 5 oder 6, **dadurch gekennzeichnet, dass** eine Schwingung mit einer im Voraus festgesetzten Frequenz als Störereignis erachtet wird.

8. Verfahren nach Anspruch 5 oder 6, **dadurch gekennzeichnet, dass** eine Abweichung der Abmessungen des Werkstückes (2), die eine im Voraus festgesetzte Abmessungstoleranz übersteigt, als Störereignis erachtet wird.

9. Verfahren nach Anspruch 5 oder 6, **dadurch gekennzeichnet, dass** eine Abweichung des Oberflächenzustandes des Werkstückes (2), die eine im Voraus festgesetzte Toleranz des Oberflächenzustandes übersteigt, als Störereignis erachtet wird.

10. Verfahren nach Anspruch 5 oder 6, **dadurch gekennzeichnet, dass** eine Abweichung der Form des Werkstückes (2), die eine im Voraus festgesetzte Formtoleranz übersteigt, als Störereignis erachtet wird.

11. Verfahren nach einem der Ansprüche 5 bis 10, **dadurch gekennzeichnet dass**, wenn das Auftreten des im Voraus festgesetzten Störereignisses festgestellt wird, die zweite Drehgeschwindigkeit (V2) schrittweise erhöht wird, bis das im Voraus festgesetzte Störereignis verschwindet, und es wird die zweite Drehgeschwindigkeit (V2) gespeichert, um über eine zweite Drehgeschwindigkeit (V2) verfügen zu können, die einen im Voraus festgesetzten Wertunterschied "DV" zur ersten Drehgeschwindigkeit (V1) aufweist.

12. Verfahren nach einem der Ansprüche 5 bis 10, **dadurch gekennzeichnet dass**, wenn das Auftreten des im Voraus festgesetzten Störereignisses festgestellt wird, die zweite Drehgeschwindigkeit (V2) schrittweise verringert wird, bis das im Voraus festgesetzte Störereignis verschwindet, und es wird die zweite Drehgeschwindigkeit (V2) gespeichert, um über eine zweite Drehgeschwindigkeit (V2) verfügen zu können, die einen im Voraus festgesetzten Wertunterschied "DV" zur ersten Drehgeschwindigkeit (V1) aufweist.

13. Werkzeugmaschine (1) zur Herstellung von Werkstücken (2) durch Abstechen in Materialstangen (3), genannt Stangen (3), wobei jede Stange (3) eine Längsachse (300) und zwei gegenüberliegende Enden, genannt erstes Ende (301) und zweites Ende (302) aufweist, wobei die Werkzeugmaschine außerdem umfasst:
- mindestens eine Werkstückträger-Spindel (5), ausgestattet mit einem aktiven Teil (50), der drehend um eine erste Achse (51) montiert ist, und der es auf kontrollierte Weise ermöglicht, die Stange (3) fest zu halten und sie zum Drehen um ihre Längsachse (300) zu bringen, um die Bearbeitung dieser Stange (3) zu ermöglichen, insbesondere auf Höhe ihres ersten Endes (301), und dies mithilfe mindestens eines Bearbeitungswerkzeuges (6), wobei der aktive Teil (50) dieser Werkstückträger-Spindel (5) durch ein erstes funktionelles Antriebsmittel (M1) mit einer ersten Geschwindigkeit (V1) zum Drehen gebracht wird,
- mindestens ein Bearbeitungssystem (9), umfassend mindestens ein Bearbeitungswerkzeug (6),
- mindestens eine angefügte Führungsvorrichtung (700), umfassend mindestens ein Drehführungselement (7) des ersten Endes (301) der Stange (3) um eine zweite Achse (70), wobei dieses Drehführungselement (7)
. durch ein Trägerelement (8) gestützt wird, das mit dem Rahmen (4) der Werkzeugmaschine (1) so verbunden ist, dass die zweite Achse (70) ungefähr mit der ersten Achse (51) ausgerichtet ist,
. mit einer zweiten Geschwindigkeit (V2) durch ein zweites funktionelles Antriebsmittel (M2) zum Drehen gebracht wird,
wobei diese Maschine **dadurch gekennzeichnet ist, dass** sie mindestens ein funktionelles Steuermittel (72) umfasst, das dazu in der Lage ist, auf mindestens entweder das erste funktionelle Antriebsmittel (M1) oder das zweite funktionelle Antriebsmittel (M2) zu wirken, um einen Geschwindigkeitsunterschied mit einem im Voraus festgesetzten Wert "DV" zwischen der ersten Drehgeschwindigkeit (V1) und der zweiten Drehgeschwindigkeit (V2) hervorzurufen.

14. Werkzeugmaschine nach Anspruch 13, **dadurch gekennzeichnet, dass** jedes funktionelle Steuermittel (72) dazu in der Lage ist, auf mindestens entweder das erste funktionelle Antriebsmittel (M1) oder das zweite funktionelle Antriebsmittel (M2) zu wirken, um einen Geschwindigkeitsunterschied mit einem im Voraus festgesetzten Wert "DV" zwischen der ersten Drehgeschwindigkeit (V1) und der zweiten Drehgeschwindigkeit (V2) hervorzurufen und, **dadurch**, mindestens teilweise mindestens ein Störereignis zu beseitigen, welcher auf mindestens einem der drei Elemente, d.h. der Werkzeugmaschine (1), der Stange (3) und dem Werkstück (2) feststellbar ist, und wovon angenommen wird, dass es zumindest teilweise einer Wechselwirkung zwischen dem Führungselement (7) und der Stange (3) zuzuschreiben ist.

15. Werkzeugmaschine nach Anspruch 13 oder 14, **dadurch gekennzeichnet, dass** der Geschwindigkeitsunterschied mit einem im Voraus festgesetzten Wert "DV" derart ist, dass die erste Drehgeschwindigkeit (V1) niedriger als die zweite Drehgeschwindigkeit (V2) ist.

16. Werkzeugmaschine nach Anspruch 13 oder 14, **dadurch gekennzeichnet, dass** der Geschwindigkeitsunterschied mit einem im Voraus festgesetzten Wert "DV" derart ist, dass die erste Drehgeschwindigkeit (V1) höher als die zweite Drehgeschwindigkeit (V2) ist.

17. Werkzeugmaschine nach einem der Ansprüche 13 bis 16, **dadurch gekennzeichnet, dass** hinsichtlich der Bestimmung des Geschwindigkeitsunterschiedes mit einem im Voraus festgesetzten Wert "DV" zwischen der ersten Drehgeschwindigkeit (V1) und der zweiten Drehgeschwindigkeit (V2) das funktionelle Steuermittel (72), das sie umfasst, dazu in der Lage ist:
- das Auftreten mindestens eines Störereignisses zu überwachen und festzustellen,
. welches Störereignis auf mindestens einem der drei Elemente, d.h. der Werkzeugmaschine (1), der Stange (3) und dem Werkstück (2) feststellbar ist, und
. wovon angenommen wird, dass es zumindest teilweise einer Wechselwirkung zwischen dem Führungselement (7) und der Stange (3) zuzuschreiben ist
- den Wert von mindestens einer der Geschwindigkeiten zu verändern, d.h. der ersten Drehgeschwindigkeit (V1) und der zweiten Drehgeschwindigkeit (V2), um einen Unterschied zwischen der ersten Geschwindigkeit (V1) und der zweiten Geschwindigkeit (V2) zu induzieren, und dies, bis das Steuermittel (72) das Verschwinden des im Voraus festgesetzten Störereignisses feststellen kann, und in diesem Fall
- mindestens eine Information hinsichtlich des Unterschiedes des Wertes zwischen der ersten Geschwindigkeit (V1) und der zweiten Geschwindigkeit (V2) zu speichern, um über einen Geschwindigkeitsunterschied mit einem im Voraus festgesetzten Wert "DV" zwischen der ersten Drehgeschwindigkeit (V1) und der zweiten Drehgeschwindigkeit (V2) verfügen zu können.
